# EUROPEAN PATENT SPECIFICATION

(11) **EP 2 895 004 B1**
(45) Date of publication and mention of the grant of the patent: **28.12.2016**
(21) Application number: 13767133.5
(22) Date of filing: 09.09.2013
(51) Int. Cl.: A23F 3/40

(54) **FLAVOURING COMPOSITION FOR INFUSION BEVERAGES**
GESCHMACKSTOFFZUSAMMENSETZUNG FÜR INFUSIONSGETRÄNKE
COMPOSITION D'ARÔME POUR DES BOISSONS D'INFUSION

(30) Priority: 14.09.2012 EP 12184482
(43) Date of publication of application: 22.07.2015
(73) Proprietor: Takasago International Corporation, Tokyo 144-8721 (JP)
(72) Inventor: LOOFT, Jan Dr., 53909 Zuelpich (DE); WEISS, James Christopher, 53909 Zuelpich (DE); PETRY, Rudolf, 53909 Zuelpich (DE); KUBO, Florinda, 53909 Zuelpich (DE)
(74) Representative: Hoffmann Eitle
(86) International application number: PCT/JP2013/074783
(87) International publication number: WO 2014/042235

(56) References cited:
- EP-A1- 0 070 719
- EP-A1- 1 214 892
- EP-A2- 0 784 933
- WO-A1-2004/089113
- WO-A1-2008/075945
- US-A- 4 880 649
- US-A- 6 056 949

## Description

### Field of the invention

The present invention relates to a flavouring composition for infusion beverages (in particular, teas), to tea bags comprising the composition and to a process for preparing the composition.

### Background of the invention / prior art

The present invention relates to flavouring infusion beverages by pouring hot water on plant material. This is usually done by prompt extraction and filtration of the plant material to be extracted. For example, hot water is poured on coffee powder in a filter when making filter coffee, the extraction and filtration process taking place simultaneously.

When making tea beverages from plant material, the procedure is similar. Conventionally, hot water is poured on plant material, and the extraction takes place within a few minutes. Subsequently, the beverage is separated from the plant material by decantation, filtration through fine sieves (tea strainer) or filters (tea filters).

Over the last few years, ready-made infusion bags already containing the amount of plant material necessary for making tea in filter materials have gained a foothold on the market.

As with making coffee, extraction and filtration are simultaneous. At the end of the infusion step, the plant materials are easily removed from the finished beverage by taking out the tea bag.

The present invention now provides an improvement of the method for flavouring such infusion beverages prepared by simultaneous extraction and filtration, especially teas made by using infusion bags.

The term tea as used in the present invention includes all beverages made from plant materials using the methods described above (or other common methods):
- teas made from leaves, leaf buds and/or stems of the tea plant Cameilla sinensis (tea within the narrower definition) in different degrees of fermentation such as green or yellow tea, oolong tea, black tea or sub-species such as pu-erh tea;
- but also teas coming under a wider definition such as herb, fruit and redbush teas. These are plant components which are not derived from the tea plant but, like those, are used for making teas and giving flavour.

Tea within the narrower definition is traded in different leaf grades which are primarily defined by the size of the particles of the plant material. One distinguishes between the grades "broken", "fannings" and "dust". "Broken" refers to particles up to a minimum size of 1.7 mm. The grade "fannings", whereby the tea particle size ranges between 0.5 and 2.0 mm, typically between 0.6 and 1.7 mm, is mainly used for infusion bags. Tea of this size is a good compromise between rapid extractability of the plant material and reliable retention during simultaneous filtration. The tea industry is offering further grades of screened tea with smaller particle diameters, but these qualities usually have a poorer flavour yield than fannings. While the grade "dust 1" having a mean particle size of 250 µm is suitable for use in tea bags, the contribution to flavour is secondary in favour of colouration of the cup by these particles. With even finer screened tea dust, the problem arises that tea that has already dried will trickle through the filter bag into the outer packaging which is an aesthetic disadvantage. Tea under a wider definition is especially understood to include fruit or herbal teas. Examples worth mentioning are redbush, rosehip, apple, hibiscus, orange, melissa or peppermint. These may be used in admixture both with each other and with tea in the narrower definition.

As a matter of principle, particles of tea in the narrower or wider definition are retained by a conventional tea bag up to a minimum pore size of 100 µm.

Infusion bags for tea are offered commercially in a large variety of flavours. For this purpose, both different species of tea and dried pieces of plant of a species or blends are used or flavour is added to the plant material. Therefore, there is considerable demand for ways to give flavour to tea in tea bags.

Several methods for giving flavour to tea are known. These may be classified on the basis of the way in which flavours are added to the tea.

For example, liquid flavours may be used for giving aroma to tea leaves. DE 39 310 94 describes a method for preparing flavoured tea where tea is rendered free-flowing and the liquid aroma substances are aerosolised in an atmosphere saturated with such aroma substances. Both water-insoluble and water-soluble flavours may be used. In addition, a fixing agent selected from the group consisting of gum arabic, dextran, dextrin, soluble starch and hydroxyethyl cellulose may be used.

Flavours in solid form may also be used to give flavour to tea leaves. When using solid forms, it is advantageous to adjust the size, (bulk) density and shape of the particles to the respective tea used. Preparing tea blends and packing the tea bags involves large amounts and processes of very high speed. Therefore, it is important for such processes that the added particles do not segregate or separate from the tea. This would result in uneven distribution of the flavours in the tea bags.

It is an advantage in this sense that the particles used have the same size distribution as the tea. For the most frequently used tea grade "fannings", this results in a particle size of 0.6 to 1.7 mm.

In the specification EP 1 771 078, tea particles are first wetted with a neutral oil and then flavoured by mixing in spray-dried flavours.

Among other things, EP 0 070 719 describes the agglomeration of tea dust but also of ground spices and herbs in a fluid bed, flavours being encapsulated in the matrix material of the agglomeration. Inert carrier materials are not described.

However, this document also describes how the majority of the flavour granulates used for flavouring tea today is made in the fluid bed mode. This is done by placing water-soluble carriers, mainly sucrose, but also modified starches or natural resins such as gum arabic, into the fluid bed and agglomerating these carriers with a solution containing the flavour.

EP 0 290 299 describes a method for preparing a galenic composition consisting of water-soluble grains with an insoluble active ingredient. In that case, the active ingredient is a dry plant extract. The active ingredient is humidified with or dissolved in an alcohol solution and said solution is granulated with a water-soluble carrier.

This shows that the granulates prepared in the fluid bed mode to flavour tea are based either on tea as the carrier material or on water-soluble carrier materials such as sucrose.
DE 19 919 204 describes pressed tablets for dissolution in hot liquids for the preparation of beverages such as coffee, cocoa or tea by adding a finely dispersed cellulose-based substance which conducts liquids. This addition promotes binding, disintegration or taste and additionally contains a separator promoting disintegration. These may be finely divided fibres of useful plants suitable for cultivation such as fibres of hardwood, softwood, cellulose, coconut or grain.

US 4,459,315 describes a granular product for preparing a flavoured beverage by extraction with water. 5 to 50 % of the granular product consists of an inert, water-insoluble, fibrous cellulose as the carrier to which 5 to 95 % of finely divided powder of a natural flavour material is bound. The cellulose is preferably α-cellulose and the powder is preferably coffee powder. The mixture may also be extruded and then re-granulated.

In addition, several methods are described where flavours in an encapsulated form are fixed to solid components in or on the infusion bag:
EP 0 245 575 claims a filter body with a solid ex-traction matter (especially tea leaves) containing at least one body releasing an active ingredient / additive when hot water is poured on it. In this case, the body described is a gelatine capsule in the tea bag. Said capsule dissolves during the brewing process.

EP 1 164 859 describes a process for flavouring a product which is to be used for preparing an infusion beverage. The process comprises preparing encapsulated flavour particles, binding the particles to a porous carrier such as a tea bag (the dosage process being controlled) and introducing the product into the carrier. The cited capsules have been prepared by coacervation. Flavoured beverages on the basis of insoluble solids are not described.

JP 3 240 665 A describes that in order to add flavour to tea bags, the thread is coated with a fragrance in the form of a clathrate in cyclodextrin and a high-molecular water-soluble compound. No granulates of inert carrier materials as the flavour carrier are described.

US 6,056,949 (A) relates to a process for the preparation of spherical or substantially spherical, practically dust-free aromatic and odoriferous granulated material which is free-flowing, mechanically stable and has a narrow grain-size distribution.

US 4,880,649 describes compositions or spices in the form of leaves, powders or particles, which are flavored with an emulsion containing an active volatile flavoring substance by directly spraying the exposed surface with the emulsion comprising the flavoring substance mixed with a solid film-building vehicle and an emulsifying agent. A flavoring process of this kind is particularly suitable for flavoring tea or products for preparing infusions or decoctions or spices, or for perfuming solid materials used for packaging.

WO 2008/075945 relates to the field of flavoured particulate food and/or beverage compositions, and describes flavour encapsulate particles comprising a core particle coated with an inner coating layer comprising one or more flavourings contained in a carrier matrix and an outer coating layer comprising a substantial amount of an extract a plant material. Said outer coating contains substantial amounts of colouring substances naturally present in the plant material.

EP 1 214 892 and WO 2004/089113 relate to a moisture and oxygen stable composition comprising inert core particles and a partial or complete coating thereon of at least one active compound encapsulated in a carbohydrate matrix, which matrix is characterised by 5 to 95 wt.% high molecular weight film forming carbohydrate; 5 to 30 wt.% mono, di and trisaccharides; and 0 to 30 wt.% maltodextrin, based on the total weight of the carbohydrate matrix. The active compound to be encapsulated in the carbohydrate matrix can be selected from the group consisting of flavourants, fragrances, pharmaceuticals and wash-active components.

### Problem to be Solved by the Invention

In the prior art, usually either the tea material itself or soluble materials such as sucrose are used as carriers for the flavour. Some of the prior art references also describe the use of the tea bag itself as the carrier. However, both carrier materials have serious disadvantages when used broadly in infusion bags.

Tea (both in the wider and in the narrower sense) as the carrier material is a flavour carrier itself. A granulate based on a specific species of tea as the carrier material usually cannot be used universally for flavouring other infusion beverages having a different aroma profile.

While water-soluble carrier materials such as sucrose do not have this disadvantage, they are often disadvantageous for other reasons:
- Water-soluble carrier substances are often cariogenic which is undesirable in many infusion beverages.
- They often have a nutritional value which no longer corresponds to the general trend towards low-calorie food.
- It is also a serious disadvantage that it is not possible to achieve all taste profiles when flavouring tea on the basis of water-soluble carrier materials. At present, the cause of this has not yet been explained by science. It was observed, however, that the floral fragrances necessary for a full tea aroma do not develop to the necessary extent when black tea flavours, for example, are granulated and encapsulated on sucrose.

Therefore, it was an object of the present invention to develop a flavour-containing composition which not only has the complex aroma profile necessary for flavouring tea beverages but can also protects it from undesired degradation and brings it to life in the infusion beverage. The composition therefore should reliably add the desired flavour to the beverage while not adversely interacting with the included flavour substance or imparting further flavours on its own.

In this way, the composition can be flexibly used for adding a well-defined flavour to a broad variety of different infusion beverage compositions without having to worry about undesired interactions or influences between the flavour composition on one hand and the extraction material of the beverage composition on the other.

### Disclosure of the Invention

The present invention is directed to the use of a flavouring composition for flavouring infusion beverages, the composition being in the form of particles and comprising:
a flavour;
a water-soluble material as a matrix containing the flavour incorporated therein; and
water-insoluble carrier particles neutral with regard to flavour and taste, which are coated with the water-soluble, flavour containing matrix, wherein the water insoluble carrier particles are selected from extracted plant materials, extracted tea leaves and extracted tea dust. Another aspect of the invention relates to the flavouring composition, wherein the water insoluble carrier particles are selected from extracted plant materials, extracted tea leaves and extracted tea dust.

Furthermore, the present invention relates to a tea bag comprising the composition, and a process for the preparation of the composition.

### Brief Description of the Drawings

Figure 1 schematically shows the structure of the composition of the present invention in particle form. The carrier particle (2) is coated (Fig. 1a) with the flavour containing matrix (1) and optionally agglomerated (Fig 1b). The coated and optionally agglomerated particle of the composition may have one or more further coatings (3).

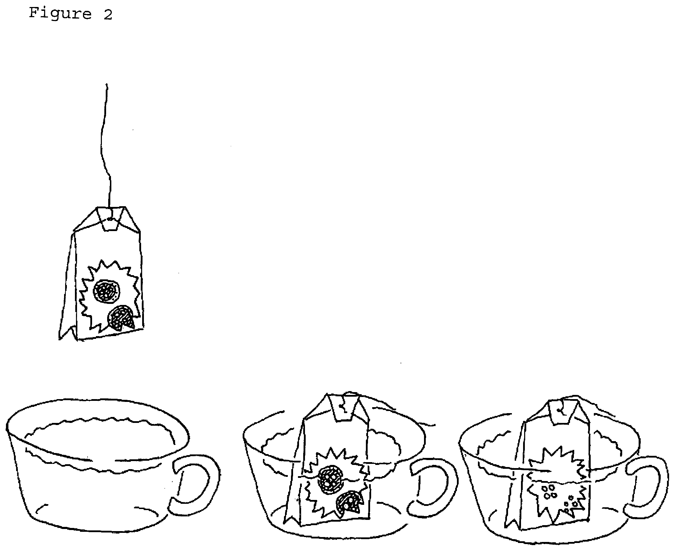

Figure 2 illustrates the behaviour of the composition when hot water is poured on a tea bag comprising the same. The water-soluble matrix dissolves and releases the encapsulated flavour while the carrier particles remain in the tea bag.

### Detailed Description of the Invention

### Constitution of the Composition

The composition for flavouring infusion beverages according to the present invention comprises:
a flavour;
a water-soluble material as a matrix containing the flavour enclosed or encapsulated therein; and
water-insoluble carrier particles neutral with regard to flavour and taste, which are coated with the water-soluble, flavour containing matrix, wherein the water insoluble carrier particles are selected from extracted plant materials, extracted tea leaves and extracted tea dust.

The composition is in the form of particles, such as granules. The mean diameter of the particles is usually within the range of 0.2 to 20 mm, a mean diameter of 0.4 to 3.0 mm being preferred, a mean diameter of 0.4 to 1.5 mm being most preferred. The particle diameter is determined by sieving. The measurement may be confirmed by examining individual particles using a microscope.

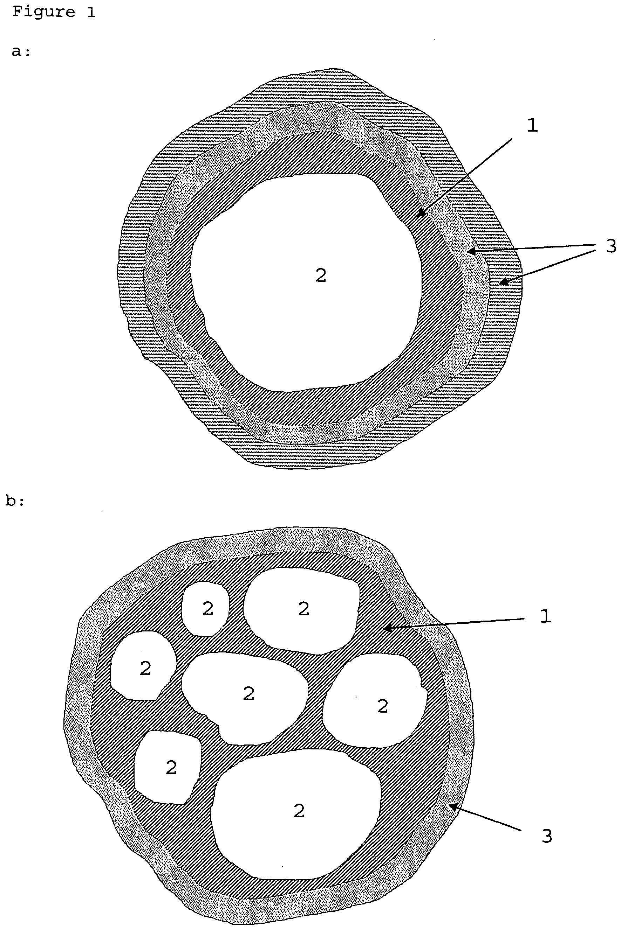

According to one embodiment (Figure 1a), the particle of the composition is not agglomerated and corresponds to the carrier particle (2) coated with the flavour containing matrix (1).

In another embodiment (Figure 1b), the particle of the composition is an agglomerated particle (granule) comprising a plurality of carrier particles (2) as the primary particles, adhered to one another via the flavour containing matrix (1).

Furthermore, the particles of the composition may have one or more further coatings (3) in addition to the coating with the flavour containing matrix (Figure 1a and 1b).

As regards the amounts of the components of the composition, the flavour load is usually comprised in the range of 5 to 30 wt.-% and preferably in the range from 10 to 20 wt.-% of the total weight of the carrier, the matrix and the flavour. The content of the water soluble matrix material is typically within the range of 15 to 40 wt.%, preferably 20 to 30 wt.% of the total weight of the carrier, the matrix and the flavour.

### The Flavour

There are no particular limitations with respect to the flavour used in the composition of the present invention. Any flavours and flavour substances suitable for infusion beverages may be used.

Examples of flavours suitable for use are extracts, essential oils, fractions of such oils, individual aroma substances or blends thereof.

Examples of flavour blends of natural origin worth mentioning are: extracts, especially extracts of tea, essential oils, concretes, absolutes, resins, resinoids, balms, tinctures.

Examples of oils usable as flavours are aniseed oil, bergamot oil, lemon oil, eucalyptus oil, grapefruit oil, camomile oil, lime oil, clove blossom oil, orange oil, peppermint oil, rosemary oil, sage oil, star anise oil, thyme oil, vanilla extract, juniper oil, wintergreen oil, cinnamon leaf oil, cinnamon bark oil. These oils may be used both as such and as fractions of the same. It is also possible to use single substances isolated from the oils.

In addition, individual aroma substances derived from the following substance classes may be part of the flavour: saturated and unsaturated aliphatic esters, e.g. ethyl butyrate, allyl capronate; aromatic esters, e.g. benzyl acetate, methyl salicylate; saturated and unsaturated organic aliphatic acids, e.g. acetic acid, capronic acid; organic aromatic acids; saturated and unsaturated aliphatic alcohols; cyclic alcohols, e.g. menthol; aromatic alcohols, e.g. benzyl alcohol; saturated and unsaturated aliphatic aldehydes, e.g. acetaldehyde; aromatic aldehydes, e.g. benzaldehyde, vanillin; ketones, e.g. menthone; cyclic ethers, e.g. p-methoxy benzaldehydes, guajacol; lactones, e.g. gamma-decalactone; terpenes, e.g. limonen, linalool, terpines, terpineol, citral.

For additional information on suitable aroma chemicals it may be referred on both books of Steffen Arcander: "Perfume and Flavor Chemicals", 1969, and "Perfume and Flavor Materials of Natural Origin", 1994.

Preferred flavours are: tea, berries (raspberry, strawberry), citrus fruit, pomaceous fruit, vanilla, spices (e.g. cloves, cinnamon), herbs (e.g. camomile, sage, thyme, rosemary, mint).

Particularly preferred is the use of oxidation-susceptible flavours, especially citrus flavours such as lemon, orange and bergamot flavours. When using such flavours in the liquid form for the purpose of flavouring tea, an unpleasant taste resulting from an oxidation reaction will soon be observed. By agglomeration, the change in taste caused by oxidation can be reduced significantly.

For the preparation of the composition of the present invention, the flavour can be incorporated in the matrix by mixing the flavour or flavour substances with an aqueous solution of the water soluble matrix material and spraying the mixture onto a fluidized bed of the carrier particles in accordance with the process described later. Since most of the above-mentioned flavours have low water solubility or are water-insoluble, the mixture with the aqueous solution of the matrix material will generally be in the form of an emulsion. If necessary, an emulsifier may be added. Possible substances are known to a person skilled in the art, and are described below.

### The Matrix Material

There are no particular restrictions on the matrix material as long as it is suitable for the use in beverages, water soluble and capable of enclosing or encapsulating the flavour.

Preferably, the matrix material has good film forming properties, so that the carrier particles can be covered by a homogeneous layer of the matrix material containing the flavour enclosed or encapsulated therein. When incorporated in the matrix, the flavour substances are protected from exposure to the air, so that evaporation and degradation reactions (e.g., by oxidation) can be prevented.

Typically, the matrix materials are chosen from carbohydrates or sugar alcohols. Mono-, Di, Oligo- or Polysaccharides may be used. The use of polysaccharides, also as mixture of different polysaccharides or of polysaccharides with mono-di- or oligosaccharides is preferred.

Starch and modified starch products such as maltodextrins, dextrins or cyclodextrins are preferable examples for the polysaccharide. The modification of starch may be accomplished by heating in dryness, by hydrolytical action of acids or bases, by enzymatic or fermentative processes on starch. The starch may origin from wheat, potatoes or maize, but also additional sources of starch are possible.

Maltodextrins are classified by dextrose equivalents (DE) and have a DE between 3 to 20. The higher the DE value, the shorter the glucose chains, the higher the solubility. Above DE 20 the material is classified as glucose syrup, at DE 10 or lower maltodextrins are classified as dextrin. In this invention, maltodextrins with a mean DE between 15-20 are preferred.

Furthermore the starches or starch hydrolysates may be totally or partially modified by chemical reactions, e.g. by oxidation, esterification or etherification. Acetylated starches, methylated starches, ethyl methylated starches, hydroxyl propylated starches or sodium octenyl succinyl starches may serve as examples.

Other examples for oligo- or polysaccharides useful as the matrix material include natural gums such as pectines, xanthane, alginate, agar agar, carrageen or gum arabic (acacia gum), or oligofructose. Among those, gum arabic (acacia gum) is particularly suitable, also because of its outstanding emulsifying properties.

Aqueous extracts or water soluble concentrates of food stuff (e.g. juice concentrates), extracts (tea extracts) or syrups (glucose syrup / corn syrup) may also be used.

Further to the carbohydrates or sugar alcohols, water soluble synthetic polymers are possible matrix materials, as long as these polymers are edible. Polyvinyl pyrrolidone, polyethylene glycol, polyvinyl alcohols or polyvinyl acetate can be mentioned as examples.

Proteins or hydrolysates of proteins such as gelatin or whey can also be used as matrix materials. These materials may be used as single compounds or as mixtures.

### Further Components included in the Matrix

To stabilize the emulsion of flavour compounds in the solution of matrix materials it may be necessary to add an emulsifier. The emulsifier may be selected from all emulsifiers which are suitable for food applications, e.g. esters of fatty acids with citric acid, mono- or diglycerides of fatty acids with fatty acids; or their polyethoxlated derivatives like "polysorbate 60".

Common additives and ingredients such as colouring components (e.g. food dyes), sweeteners, antioxidants, food-grade acids (e.g. citric acid, acetic acid, lactic acid) or their salts, flavour-enhancing substances such as sodium glutamate, vitamins, minerals, etc. may be added to the emulsion.

Examples for colouring components are food colorants, caramel colour, malt extract, concentrates of colouring food, like elderberry, carrot or pumpkin.

### The Carrier Particles

Suitable materials of the carrier particles are water-insoluble and neutral with regard to flavour and taste.

A carrier material is called neutral with regard to flavour and taste if it does not add an own specific flavour or taste to the infusion prepared from granules based on this material. The material can be called "tasteless". It adds no own specific taste to the infusion because it releases not sufficient flavour or taste active molecules to influence the flavour profile of the infusion. Nor adsorbs it flavour from the infusion.

According to the present invention, the carrier materials are selected from extracted plant materials, extracted tea leaves and extracted tea dust.

The extracted plant materials, in particular, extracted tea leaves and extracted tea dust have a large surface area and can keep flavours sufficiently. In addition, these materials can be formed into fine particles and can keep aroma stably for a long period of time, and therefore, even if stored or preserved at a store or the like for a long period of time until purchase, the strength of flavour at the time of extraction is high. Further, the extracted plant materials are neutral with regard to flavour and taste and have no unfavorable taste, and therefore can impart a desired flavour and taste profile including a complicated one to infusion beverages. Moreover, enhancing diffusivity and the balance of flavour at the time of extraction by pouring hot water are good. Furthermore, there is an advantage that the extracted plant materials have high safety because natural materials are utilized therefor. As tea leaves and tea dust that can be used for extracted tea leaves and extracted tea dust, those obtained from the tea plant Cameilla sinensis (tea within the narrower definition) in different degrees of fermentation such as green or yellow tea, oolong tea, black tea or sub-species such as pu-erh tea are preferably used, and tea leaves and tea dust of black tea are particularly preferably used.

The extracted plant materials can be used without particular limitation as long as they are provided after extracting flavour and taste from plant materials. The method for extracting flavour and taste from plant materials is not particularly limited, and a publicly-known method can be used. For example, the steam distillation method, the supercritical carbon dioxide extraction method, the thin-film-type steam distillation method (Spinning Cone Column) or the like can be used. After extracting flavour and taste from plant materials using these methods, an extraction residue thereof can be used. It is advantageous to use the wettish extracted plant material immediately after extraction. In this case drying, agglomeration and coating can be all done in the same fluidized bed equipment. If the extracted plant material needs to be stored for some time, for microbiological reasons it is preferred to dry the material before storing. All methods known to the skilled person are possible, including drying in fluidized bed equipment.

It is more preferable and economic to utilize a residue obtained at the time of extracting flavour and taste from tea leaves and tea dust for a tea bag or the like. In a preferred embodiment of the present invention, an extraction residue obtained at the time of extracting flavour and taste by a method using a thin-film-type steam distillation equipment (Spinning Cone Column), which is often used at the time of extracting a fresh flavour, can be preferably used. The solid, extracted plant material can be isolated from the Spinning Cone Column slurry by all methods known to a skilled person, e.g. filtering, filter-pressing, centrifugation or sedimentation. For the use of extracted plant materials resulting from the Spinning Cone Column most preferred are continuous solid liquid separation methods, in this case a continuously operating pressure-filtering system, a "130 DeWatering Press" from Flavourtech.
Effective utilization of residues obtained after the extraction treatment of plant materials is preferred from the viewpoint of environmental protection.

The carrier is present in the form of particles. Preferably, the shape of the carrier particles is such that the aspect ratio of the longest extension to the shortest extension of the particles is less than 3, more preferably less than 2, even more preferably less than 1.5. Most preferably, the particles are of a nearly spherical shape.

If the aspect ratio is higher (e.g., in case of fibrous materials such as plant fibers) the coating of the particles in the fluidized bed may become difficult, since the particles may entangle and felting may occur.

Particles having a mostly spherical shape are especially suitable for the fluidized bed process.

The extracted plant materials that are residues obtained after the extraction treatment of plant materials can have a mostly spherical shape without particular treatment.

### Further Coatings

The composition of the present invention may comprise one or more further coatings in addition to the coating with the water-soluble, flavour-containing matrix.

Although the matrix already provides protection of the flavour from degradation by evaporation or oxidation, the protection can be greatly improved by the additional coatings. Thus, the shelf-life of the composition can be extended and the aroma can be preserved.

The same materials as used for the formation of the flavour containing matrix are also suitable for the further coatings. Most preferred are materials having good film forming properties, because they are able to build up dense layers on the particles. These materials may origin from modified starches (e.g. acetylated starch), partly hydrolysed and/or chemically modified starches or water soluble polymers (Polyvinyl pyrrolidone, polyethylene glycol, polyvinyl alcohol, polyvinyl acetate).

Furthermore, it is possible to use melts of solid substances for the purpose of coating. These substances need to be solid at room temperature and to be meltable to obtain a homogenous, liquid melt. This melt is sprayed into the fluidized bed. The particles within the fluidized bed are wetted by the melt. The liquid layer on the particles is quickly cooled by the stream of uprising air and phase transition to the solid state is solidifying the coating around the particles.

In principle every edible, solid substance which has a reversible phase transition to liquid state between 40 - 90 °C and forms a homogenous and liquid melt is suitable for the melt coating process.

Possible examples are higher hydrocarbons (e.g. paraffin, microcrystalline waxes), fats from animals (e.g. suet), fat from plants (e.g. palm oil) or long chain triglycerides, waxes from animals or plants (e.g. bees wax, carnauba wax, candelilla wax), fatty acids (e.g. stearic acid) or polymers which are applicable for food or pharmaceutical applications (e.g. short chain polyethylene glycols).

### Preparation Process

The composition of the present invention may be prepared by a process comprising the following steps:
(a) providing a coating liquid comprising the water soluble matrix material and the flavour;
(b) providing the water-insoluble carrier particles; and
(c) coating and optionally agglomerating the carrier particles with the coating liquid; and
(d) optionally applying one or more further coatings to the composition obtained in step (c).

The coating liquid can be provided as an aqueous solution of the matrix material, which contains the flavour in emulsified form. Further ingredients as indicated above, such as emulsifiers or colorants, may be included optionally. The carrier particles may be provided in a fluidized bed, and are coated with the coating liquid, e.g., by spraying.

The process for preparing flavour granulates in a fluid bed is known per se and described, for example, in EP 0 070 719. In a fluid bed apparatus, particulate material is generally fluidized in a fluid bed space by a gas stream rising upward from the bottom. Liquids (solutions or emulsions) may be sprayed onto the fluidized material by means of dies. The spray mist wets the fluidized particles. Depending on process management (which is essentially a function of the humidity of the particles) the wetted particles will be coated or agglomerated.

During coating, the solution or emulsion sprayed onto the particle will dry. In the course of this process, dissolved substances of the emulsion or solution which are capable of forming a film will be deposited on the particle as a layer, resulting in coating.

During agglomeration in a fluid bed, adhesive forces of wetted particles cause the particles impinging upon each other to agglomerate. These agglomerates solidify as a result of drying and form a stable particle because dissolved matrix materials separate from the spray solution or emulsion as solids and glue the agglomerate together.

The transition between coating and agglomeration can substantially be controlled by the amount of the humidity introduced into the fluid bed: humid particles are more susceptible to agglomeration while coating is usually the result of rapid drying.

Depending on the spatial arrangement of the dies, a distinction is also made between the two basic processes of top spraying and bottom spraying in fluid bed apparatuses.

Common fluid bed apparatuses usually operate with dies applying the spray solutions or emulsions to the fluid bed from above. In this case, however, the pathways of the spray mist to the individual particles making up the entirety of the fluidized spray material have different lengths. The application of the spray mist is not homogeneous and results in uneven agglomeration (broad distribution of the particle size) and, respectively, uneven coating of the individual particles. Moreover, a large portion of the spray is carried off without wetting the particles since the orientation of the direction of spraying is counter-current to the fluidizing gas stream. This will result in a high dust portion of the fluid-bed product later.

More homogeneous results are achieved by using the bottom-spray method. For this purpose, the dies for spraying the emulsion are arranged below or directly in the lower region of the fluid bed. The direction of the spray is substantially the same as that of the fluidizing gas stream. This means that the pathways for wetting the individual particles are short, resulting in a more even agglomeration or a more homogeneous coating of the particles.

Moreover, homogeneous mixing of the fluid bed is advantageous for a uniform result in agglomeration. Homogeneous mixing of the fluid bed may be achieved by structural measures in the apparatus used, for example by forcing circulating motions on the entirety of the fluidized material. This may be achieved by using dies rotating in the horizontal direction, by rotating bottom plates or baffles as found, for example, in the rotary granulator produced by the Glatt company. However, such apparatuses have the disadvantage of high sensitivity of the rotating parts and high mechanical strain on the particles in the fluid bed.

Circulation of the fluid bed may also be achieved by tangential components of the fluidizing stream of air and/or by tangential components of the solutions or emulsions sprayed into the bed.

The "Unilab™" apparatus produced by the Bosch company of Schopfheim (formerly "Hüttlin") has all of these structural advantages and is used in the subsequent Examples of the present invention. In this apparatus, two dies operate in the bottom-spray mode. They are inclined at a 45° angle to the fluid bed; moreover, additional spray air is introduced into the outer coaxial dies. This vertical movement in the fluid bed is promoted by using a "diskjet^{®}": radial slits for introducing the fluidizing stream of air put the air into a circulating motion (by directed milling of the slits) which efficiently circulates the fluid bed.

### Use for Flavouring Infusion Beverages

For providing a flavoured composition for an infusion beverage such as a tea composition, the flavouring composition of the present invention may be blended with any kind of extractable material suitable for infusion beverages, such as the plant materials commonly used for teas.

For example, the composition of the present invention may be used in combination with tea in the narrower sense, i.e., with leaves, leaf buds and/or stems of the tea plant Cameilla sinensis (tea within the narrower definition) in different degrees of fermentation such as green or yellow tea, oolong tea, black tea or sub-species such as pu-erh tea.

The composition of the present invention may also be used for flavouring teas under a wider definition such as herb, fruit and redbush teas. These are plant components which are not derived from the tea plant but, like those, are used for making teas and giving flavour. Examples include redbush, rosehip, apple, hibiscus, orange, melissa or peppermint.

The flavouring composition may be blended with a single type of extractable material or with a mixture of two or more extractable materials. Furthermore, a single flavour type of the composition or a combination of two or more types may be used.

The typical percentage of the flavouring composition in a blended tea composition is commonly in the range from 1-10 wt.%, usually in the range from 2-5 wt.%, based on the total weight of the solids of the tea composition.

### Tea Bags comprising the Composition of the present invention

The present invention also provides a tea bag comprising a filter enveloping the flavouring composition of the present invention, typically together with one or more types of extractable plant materials for infusion beverages (teas).

There are two main requirements for the application of tea bags. First of all, the hot water needs a quick and easy access to the extraction material during the brewing. Secondly, the extraction material needs to be retarded by the tea bag.

Tea bags are available in different geometries, sizes and of different filter materials. The filter material needs to be tear resistant, moisture proof and at the same time to be tasteless. In the past tea bags have been made from silk, cotton and cellulose, but these material were disadvantageous by their own taste. Nowadays most tea bags are made from Abaca fibres ("Manilla fibres"), from bio polymers like poly lactide or heat sealable composite materials having a thermoplastic fibre coating on one side.

Tea bags which are usual in trade show a good compromise between permeability for the hot water and retention of the extraction material - both by the dry tea bag (no "sifting" into the outer packaging) and during the extraction by hot water. Possible cloudiness of the infusion caused by fines or small articles is unfavourable. Typically, these filter materials have a mesh aperture up to 100 µm. At the end of the infusion step, the plant materials are easily removed from the finished beverage by taking out the tea bag.

### Examples

### Equipment

The compositions of the subsequent Examples were prepared using a Hüttlin laboratory fluid bed unit type Unilab™:
Hüttlin GmbH / A Bosch Packaging Technology Company Hohe-Flum-Strasse 42
D-79650 Schopfheim / Germany

Unit for drying, granulation and coating of solid matter according to the fluid bed process

**Process: Fresh air / outgoing air operation**

| | |
|---|---|
| Type: | Unilab™ |
| Product container M; Volumen: | 13,5 1 |
| Dynamic filters: | 5 |
| 3-component spray nozzles: | 2 |
| Flow process air: | 100 ... 450 m3/h |
| Max. temperature of process air: | 90°C |

### Fluidized bed:

Product container with 13,5 1 volume. A Diskjet^{®} insert is integrated in the product container. Through the apertures (gaps) of the air guide sheets of the Diskjet^{®}, the process air which is fed from the below tangentially reaches the product bed. The velocity of the air leaving the gaps is relatively high so it sets the product lying above the gaps in motion.

### Spray dies:

Two 3-component spray dies for spray liquid / atomizing air / microclimate are used. The spray liquid is transported in the center part of the die. The end piece of the die can be fitted with liquid caps with different diameters (1,0 mm used as standard). Around this liquid-leading part, the spray air is conducted. It atomizes the spray liquid. Both media (spray liquid and spray air) are again surrounded by a third component, the microclimate. The microclimate ensures the best possible development of the spray cone, covers this spray cone from drying air by comparably low temperature and high humidity and at the same time keeps the front area of the nozzle clean.

### Dynamic filter:

Five dynamic filters in the upper part of the filter dome guarantee a continuous recirculation of the product into the product container during the granulation process. Each filter is continuously cleaned during the process by a periodical air stream in opposite direction.

Inside cone filter cylinders are used. They open at the bottom and extend as a filter cone from below upwards on the inside.
Mesh size: 15 - 25 µm.

### Adjustment of spray air and microclimate

| Medium | Standard value in bar |
|---|---|
| Spray air | 0,2 ... 0,8 |
| Microclimate | 0,10 ... 0,15 |

The pressure of the spray air depends on the viscosity of the spray liquid, the spray rate and the diameter of the liquid cap; e.g. for spray liquids having a high viscosity, a high spray rate is required than for spray liquids with low viscosities.

### Preparation of the Compositions

As described in the following Examples and Comparative Examples, various granulates based on different carrier materials were made. The following carrier materials were used: tea dust "dust 1"(black tea "Dust 1" from J. Bünting Teehandelshaus GmbH & Comp., Leer made from the tea plant Cameilla sinensis, both as extracted and as original material), tea leaves "leaves 1" (black tea "Probentee" from J. Bünting Teehandelshaus GmbH & Comp., Leer made from the tea plant Cameilla sinensis, as extracted), tea granulates "granulates 1" (black tea "Teestaub granuliert" from J. Bünting Teehandelshaus GmbH & Comp., Leer made from the tea plant Cameilla sinensis), plant fibres of different mean fibre length ("Cellulose PF75"), pea starch (I 50 M") and a globular, micro crystalline starch ("VIVAPUR® MCC 200").

### Comparative Example 1

### Agglomerate on the basis of non-extracted tea dust

1,500 g of tea dust ("dust 1"; mean particle size 250 µm) are introduced into the fluid bed and fluidised by means of 50°C air (250 l/min). Within 40 minutes, an emulsion of 1,000 g of water, 400 g of maltodextrin, 200 g of gum arabic and 390 g of tea flavour of the type black tea "Darjeeling" TEG 10351786 are injected into the fluid bed from below. The resulting agglomeration will lead to the formation of particles having a mean diameter of 520 µm. The particles are then coated in the fluid bed within 8 minutes by spraying a solution of 100 g of acetylated starch in 250 ml of water into the fluid bed from below (calculated load of 15 % of tea flavour in the dry matter).

### Example 1

### Agglomerates on the basis of extracted tea dust

### Extraction of tea dust

3000 g of tea dust ("dust 1"; mean particle size 250 µm) are extracted with 20 1 of boiling water for 10 min. The swollen tea dust is filtered of by use of a suction filter. The remaining wet solids (tea dust) is dried by use of hot air (90°, 300m³/h) in the fluidized bed for 70 min.

### Agglomeration with flavour

1,500 g of the extracted tea dust are introduced into the fluid bed and fluidized by means of 90°C air (250 l/min). Within 30 minutes, an emulsion of 1,000 g of water, 400 g of maltodextrin, 200 g of gum arabic and 390 g of tea flavour of the type black tea "Darjeeling" TEG 10351768 are injected into the fluid bed from below. The resulting agglomeration will lead to the formation of particles having a mean diameter of 700 µm. The particles are then coated in the fluid bed within 8 minutes by spraying a solution of 100 g of acetylated starch in 250 ml of water into the fluid bed from below (calculated load of 15 % of tea flavour in the dry matter).

### Agglomeration without flavour (Reference)

1,500 g of the extracted tea dust are introduced into the fluid bed and fluidized by means of 90°C air (250 l/min). Within 30 minutes, an emulsion of 1,000 g of water, 400 g of maltodextrin, 200 g of gum arabic are injected into the fluid bed from below. The resulting agglomeration will lead to the formation of particles having a mean diameter of 600 µm.

### Comparative Example 2

### Agglomerate on the basis of sucrose

1,500 g of household sugar (finely refined, sucrose) are introduced into the fluid bed and fluidised by means of 50°C air (350 l/min). Within 40 minutes, an emulsion of 1,000 g of water, 400 g of maltodextrin, 200 g of gum arabic, 200 g of caramelin and 405 g of tea flavour of the type black tea "Darjeeling" TEG 10351768 are injected into the fluid bed from below. The resulting agglomeration will lead to the formation of particles having a mean diameter of 700 µm. The particles are then coated in the fluid bed within 12 minutes by spraying a solution of 100 g of acetylated starch in 250 ml of water into the fluid bed from below (calculated load of 15 % of tea flavour in the dry matter).

### Example 2 (Reference Example not belonging to the invention)

Agglomerate on the basis of microcrystalline cellulose 1,500 g of microcrystalline cellulose (VIVAPUR® MCC 200, J. Rettenmaier & Söhne GmbH & Co. KG; mean particle size 250 µm) are introduced into the fluid bed and fluidised by means of 70°C air (250 l/min). Within 40 minutes, an emulsion of 1,000 g of water, 400 g of maltodextrin, 200 g of gum arabic, 60 of malt extract and 390 g of tea flavour of the type black tea "Darjeeling" TEG 10351768 are injected into the fluid bed from below. The resulting agglomeration will lead to the formation of particles having a mean diameter of 700 µm. The particles are then coated in the fluid bed within 12 minutes by spraying a solution of 100 g of acetylated starch in 250 ml of water into the fluid bed from below (calculated load of 15 % of tea flavour in the dry matter).

### Example 3 (Reference Example not belonging to the invention)

### Agglomerate on the basis of plant fibres

1,500 g of a plant fibre ("Cellulose PF75") are introduced into the fluid bed and fluidised by means of 80°C air (200 l/min). Within 60 minutes, an emulsion of 1,000 g of water, 400 g of maltodextrin, 200 g of gum arabic, 60 of malt extract and 300 g of tea flavour of the type black tea "Darjeeling" TEG 10351768 are injected into the fluid bed from below.

The agglomeration leads to the formation of particles having a mean diameter of 500 µm. The particles are then coated in the fluid bed within 12 minutes by spraying a solution of 100 g of acetylated starch in 250 ml of water into the fluid bed from below (calculated load of 15 % of tea flavour in the dry matter).

### Example 4 (Reference Example not belonging to the invention)

Agglomerate on the basis of pea starch 1,500 g of pea starch (I 50M, Roquette GmbH) are introduced into the fluid bed and fluidised by means of 80°C air (250 l/min). Within 40 minutes, an emulsion of 1,000 g of water, 400 g of maltodextrin, 200 g of gum arabic, 60 of malt extract and 390 g of tea flavour of the type black tea "Darjeeling" TEG 10351768 are injected into the fluid bed from below. The resulting agglomeration will lead to the formation of particles having a mean diameter of 500 µm. The particles are then coated in the fluid bed within 12 minutes by spraying a solution of 100 g of acetylated starch in 250 ml of water into the fluid bed from below (calculated load of 15 % of tea flavour in the dry matter).

### Comparative Example 3

### Agglomerate on the basis of non-extracted tea granulates

1,500 g of tea granulates ("granulates 1"; mean particle size 800 µm) are introduced into the fluid bed and fluidised by means of 90°C air (250l/min). Within 30 minutes, an emulsion of 1,000 g of water, 400 g of maltodextrin, 200 g of gum arabic and 390 g of tea flavour of the type black tea (Darjeeling) "Darjeeling" TEG 10351768 are injected into the fluid bed from below. The resulting agglomeration will lead to the formation of particles having a mean diameter of 1000 µm. The particles are then coated in the fluid bed within 8 minutes by spraying a solution of 100 g of acetylated starch in 250 ml of water into the fluid bed from below (calculated load of 15 % of tea flavour in the dry matter).

### Example 5

### Agglomerate on the basis of extracted tea leaves

### Extraction of tea leaves

Extracted tea leaves ("leaves 1"; mean particle size 2500 µm) is prepared in two different ways:
1) 3000 g of tea leaves ("leaves 1", mean particle size 2500 µm) are extracted with 20 1 of boiling water for 10 min. The remaining tea slurry is filtered of by use of a suction filter.
2) A black tea slurry, prepared from 50 kg of tea leaves ("leaves 1", mean particle size 2500 µm) and 450 kg cold water was processed on a "SCC 1000" (Spining Cone Column, Flavourtech Pty. Ltd). It is important to agitate the slurry constantly, otherwise the SCC is sensitive to clogging. The Slurry was processed under these conditions: Top Temperature = 100°C, Offset Temperature = -3°C, Flow Rate = 500 l/h. The wettish tea leaves were isolated immediately by use of a "130 DeWatering Press" (Flavourtech Pty. Ltd.).

The remaining wet solids (tea leaves) are dried by use of hot air (90°, 300 m³/h) in the fluidized bed for 90 min.

### Agglomeration with flavour

1,500 g of the extracted tea leaves (prepared by the above method 1)) are introduced into the fluid bed and fluidized by means of 90°C air (250 l/min). Within 30 minutes, an emulsion of 1,000 g of water, 400 g of maltodextrin, 200 g of gum arabic and 390 g of tea flavour of the type black tea (Darjeeling) "Darjeeling" TEG 10351768 are injected into the fluid bed from below. The resulting agglomeration will lead to the formation of particles having a mean diameter of 2800 µm. The particles are then coated in the fluid bed within 8 minutes by spraying a solution of 100 g of acetylated starch in 250 ml of water into the fluid bed from below (calculated load of 15 % of tea flavour in the dry matter).

### Agglomeration without flavor (Reference)

1,500 g of the extracted tea leaves are introduced into the fluid bed and fluidized by means of 90°C air (250 l/min). Within 30 minutes, an emulsion of 1,000 g of water, 400 g of maltodextrin, 200 g of gum arabic are injected into the fluid bed from below. The resulting agglomeration will lead to the formation of particles having a mean diameter of 2700 µm.

### Results

### (1) Neutrality of the Carrier

For evaluating the neutrality of the carrier materials with respect to flavour and taste, it is determined whether the carrier material changes the flavour profile of black tea.

An agglomerate based on the carrier and without addition of flavour is prepared by the above-described method. 0.11 g of this agglomerate is blended with 4.00 g of black tea of the brand "Lipton Yellow Label" and filled into an infusion bag (mesh aperture 100µm). This infusion is compared with an infusion prepared from 4.00 g of unmodified "Lipton Yellow Label". Both infusions are prepared by pouring hot water (95°C) over the bags. The teas were allowed to draw for 3.0 minutes. Then the infusion bags are taken out.

Four test persons with experienced palates taste and compare the teas. If no significance between both infusions can detected, the material is called "neutral with regard to flavour and taste".

For example, an agglomerate prepared from (non-extracted) black tea dust (as used in Comparative Example 1) changed the flavour profile of "Lipton Yellow Label". On the other hand, agglomerate prepared from extracted and dried black tea dust (Example 1), without any flavour added, did not change the flavour profile of "Lipton Yellow Label". This carrier material can be called "neutral with regard to flavour and taste".

Similarly, the microcrystalline cellulose of Reference Example 2, the cellulose fibers of Reference Example 3, the pea starch of Reference Example 4 and agglomerate prepared from extracted and dried black tea leaves, without any flavour added, of Example 5 were confirmed to be neutral with regard to flavour and taste, while the sucrose of Comparative Example 2 and the agglomerate prepared from (non-extracted) tea granulates of Comparative Example 3 were found to change the flavour profile of "Lipton Yellow Label".

### (2) Examination on dry trickling: trickling of agglomerates through the filter bag

0.11 g each of every above mentioned flavour granulate was blended with 4.00 g of black tea of the brand "Lipton Yellow Label" and filled into infusion bags (mesh aperture 100µm). The bags were placed in outer paper bags and these were shaken on a vibrating plate for 15 minutes. Afterwards all outer bags were inspected for material which trickle through the bags. None of the agglomerates shows additional trickling compared to original "Lipton Yellow Label".

### (3) Tasting

0.11 g of each flavour granulate (calculated flavour load of 15% black tea flavour) was blended with 4.00 g of black tea of the brand "Lipton Yellow Label" and filled into infusion bags, followed by pouring hot water (95°C) over the bags. The tea was allowed to draw for 3.0 minutes. Then the infusion bag was taken out.

Four test persons with experienced palates tasted and compared the teas. The tea containing granulates on the basis of neutral carriers (microcrystalline cellulose, plant fibres, pea starch, extracted tea leaves and extracted tea dust) was preferred over those with granules on the basis of sucrose or of unextracted tea dust because it had a more pronounced floral touch.

The teas comprising granules based on microcrystalline cellulose and extracted tea dust received the highest scores. The sample prepared from microcrystalline cellulose showed the most intensive flavour and was characterized as most floral, but also as most balanced and complex sample, also showing most mouthfeel. The sample prepared from extracted tea leaves was second in intensity and showed good floral notes and complexity. On the other hand, the samples prepared from unextracted tea dust and sucrose were the ones with the least intensive floral notes and flavour.

Further, 0.5 g of each flavour granulate (calculated flavour load of 15% black tea flavour) was blended with 2.00 g of black tea of the brand "Lipton Yellow Label" and filled into infusion bags, followed by pouring 150 ml of hot water (95°C) over the bags. The tea was allowed to draw for 3.0 minutes. Then the infusion bag was taken out.

Four test persons with experienced palates tasted and compared the teas in terms of "enhancing diffusivity". The assessment was made with respect to the below-described five items, and each of the items was assessed on a scale of 0 to 5, using the black tea of the brand "Lipton Yellow Label" as the control. Total scores of the four persons are regarded as results of the assessment. The results of the assessment are shown in Table 1.
- "strength of flavour immediately after pouring hot water"
- "strength of flavour 3 minutes after pouring hot water"
- "balance of flavour immediately after pouring hot water"
- "top impact of flavour immediately after pouring hot water"
- "strength of flavour immediately after pouring hot water after stored at room temperature for 1 year"

As shown in Table 1, the samples prepared from the extracted tea dust and the extracted tea leaves were most highly assessed in terms of enhancing diffusivity (Examples 1 and 5). In the case of the sample prepared from the microcrystalline cellulose, the strength of flavour 3 minutes after pouring hot water was high, but enhancing diffusivity was slightly inferior (Reference Example 2). Meanwhile, in the case of the samples obtained from the non-extracted tea dust, the non-extracted tea granulates and the sucrose, enhancing diffusivity was poor (Comparative Examples 1, 2 and 3).

**Table 1**

| | Example 1 | Comparative Ex. 1 | Comparative Ex. 2 | Comparative Ex. 3 | Example 2* | Example 5 |
|---|---|---|---|---|---|---|
| balance of flavour immediately after pouring hot water | 18 | 13 | 12 | 11 | 16 | 19 |
| strength of flavour immediately after pouring hot water | 19 | 16 | 14 | 12 | 16 | 19 |
| strength of flavour 3 minutes after pouring hot water | 18 | 13 | 13 | 10 | 16 | 18 |
| top impact of flavour immediately after pouring hot water | 20 | 16 | 14 | 12 | 17 | 20 |
| strength of flavour immediately after pouring hot water after stored at room temperature for 1 year | 16 | 5 | 5 | 4 | 9 | 15 |

| | | | | | | |
|---|---|---|---|---|---|---|
| * Reference Example not belonging to the invention | | | | | | |

## Claims

1. A flavouring composition for infusion beverages, the composition being in the form of particles and comprising:
a flavour;
a water-soluble material as a matrix containing the flavour incorporated therein; and
water-insoluble carrier particles neutral with regard to flavour and taste, which are coated with the water-soluble, flavour containing matrix,
wherein the carrier particles comprise or consist of one or more of the following materials: extracted plant materials, extracted tea dust, extracted tea leaves.

2. The composition according to claim 1, which is in the form of agglomerated particles.

3. The composition according to claim 1 or 2, wherein the mean diameter of the particles is 0.2 to 20 mm, a mean diameter of 0.4 to 3.0 mm being particularly preferred.

4. The composition according to any of the claims 1 to 3, wherein the water-soluble matrix material comprises or consists of one or more of the following materials: starch and modified starch products; natural gums; oligofructose; edible, water soluble polymers.

5. The composition according any of the claims 1 to 4, which further comprises one or more additional coatings on the coating with the flavour containing matrix material.

6. The composition according to claim 5, wherein the further coating comprises a film-forming agent selected from: starch and modified starch products; natural gums; oligofructose; edible, water soluble polymers; hydrocarbons; fats; waxes.

7. Use of a flavouring composition, which is in the form of particles and comprises:
a flavour;
a water-soluble material as a matrix containing the flavour incorporated therein; and
water-insoluble carrier particles neutral with regard to flavour and taste, which are coated with the water-soluble, flavour containing matrix,
for flavouring an infusion beverage,
wherein the carrier particles comprise or consist of one or more of the following materials: extracted plant materials, extracted tea dust, extracted tea leaves.

8. The use according to claim 7, wherein the composition is used together with an extractable plant material.

9. A tea bag comprising a filter enveloping the composition according to one or more of the claims 1 to 6.

10. The tea bag according to claim 9, wherein the carrier particles have a size distribution such that the smallest diameter of the carrier particles is larger than the pore diameter of the filter material of the tea bag.

11. A process for preparing a composition according to at least one of the claims 1 to 6, which comprises the following steps:
(a) providing a coating liquid comprising the water soluble matrix material and the flavour;
(b) providing the water-insoluble carrier particles comprising or consisting of one or more of the following materials: extracted plant materials, extracted tea dust, extracted tea leaves,
(c) coating and optionally agglomerating the carrier particles with the coating liquid; and
(d) optionally applying one or more further coatings to the composition obtained in step (c).

12. The process according to claim 11, which has a mixing ratio of 50-70 wt.% carrier particles, 20-30 wt.% matrix material and 10 to 20 wt.% flavour, the sum of carrier, matrix and flavour being 100 wt.%.

13. The process according to claim 11 or 12, which is carried out in a fluid bed reactor.

14. A process according to claim 13, where the fluid bed reactor is operated in the bottom spray mode.

## Patentansprüche

1. Arömazusammensetzung für Aufgussgetränke, wobei die Zusammensetzung in Teilchenform vorliegt und umfasst:
einen Aromastoff;
ein wasserlösliches Material als Matrix, die den Aromastoff hierin enthält; und
wasserunlösliche Trägerteilchen, die im Hinblick auf Aroma und Geschmack neutral sind und die mit der wasserlöslichen aromahaltigen Matrix beschichtet sind,
wobei die Trägerteilchen eines oder mehrere der nachstehenden Materialien umfassen oder daraus bestehen: extrahierte Pflanzenmaterialien, extrahierter Teestaub, extrahierte Teeblätter.

2. Zusammensetzung gemäss Anspruch 1, die in Form agglomerierter Teilchen vorliegt.

3. Zusammensetzung gemäss Anspruch 1 oder 2, wobei der mittlere Teilchendurchmesser 0,2 bis 20 mm beträgt, ein mittlerer Durchmesser von 0,4 bis 3,0 mm ist besonders bevorzugt.

4. Zusammensetzung gemäss irgendeinem der Ansprüche 1 bis 3, wobei das wasserlösliche Matrixmaterial eines oder mehrere der nachstehenden Materialien umfasst oder daraus besteht: Stärke und modifizierte Stärkeprodukte; natürliche Gummen; Oligofructose; essbare, wasserlösliche Polymere.

5. Zusammensetzung gemäss irgendeinem der Ansprüche 1 bis 4, die ferner eine oder mehrere zusätzliche Beschichtung(en) auf der Beschichtung mit dem aromahaltigen Matrixmaterial umfasst.

6. Zusammensetzung gemäss Anspruch 5, wobei die zusätzliche Beschichtung ein filmbildendes Mittel, ausgewählt aus Stärke und modifizierten Stärkeprodukten; natürlichen Gummen; Oligofructose; essbaren, wasserlöslichen Polymeren; Kohlenwasserstoffen; Fetten und Wachsen, umfasst.

7. Verwendung einer Aromazusammensetzung, die in Form von Teilchen vorliegt und umfasst:
einen Aromastoff;
ein wasserlösliches Material als Matrix, die den Aromastoff hierin enthält; und
wasserunlösliche Trägerteilchen, die im Hinblick auf Aroma und Geschmack neutral sind und die mit der wasserlöslichen aromahaltigen Matrix beschichtet sind,
zum Aromatisieren eines Aufgussgetränks,
wobei die Trägerteilchen eines oder mehrere der nachstehenden Materialien umfassen oder daraus bestehen: extrahierte Pflanzenmaterialien, extrahierter Teestaub, extrahierte Teeblätter.

8. Verwendung gemäss Anspruch 7, wobei die Zusammensetzung zusammen mit einem extrahierbaren Pflanzenmaterial verwendet wird.

9. Teebeutel, umfassend einen Filter, der die Zusammensetzung gemäss einem oder mehreren der Ansprüche 1 bis 6 umhüllt.

10. Teebeutel gemäss Anspruch 9, wobei die Trägerteilchen eine solche Grössenverteilung aufweisen, dass der kleinste Durchmesser der Trägerteilchen grösser als der Porendurchmesser des Filtermaterials des Teebeutels ist.

11. Verfahren zur Herstellung einer Zusammensetzung gemäss zumindest einem der Ansprüche 1 bis 6, das die nachstehenden Schritte umfasst:
(a) Bereitstellen einer Beschichtungsflüssigkeit, die das wasserlösliche Matrixmaterial und den Aromastoff umfasst;
(b) Bereitstellen der wasserunlöslichen Trägerteilchen, die eines oder mehrere der nachstehenden Materialien umfassen oder daraus bestehen: extrahierte Pflanzenmaterialien, extrahierter Teestaub, extrahierte Teeblätter,
(c) Beschichten und gegebenenfalls Agglomerieren der Trägerteilchen mit der Beschichtungsflüssigkeit; und
(d) gegebenenfalls Aufbringen von einer oder mehreren weiteren Beschichtung(en) auf die in Schritt (c) erhaltene Zusammensetzung.

12. Verfahren gemäss Anspruch 11, die ein Mischungsverhältnis von 50 bis 70 Gew.% Trägerteilchen, 20 bis 30 Gew.% Matrixmaterial und 10 bis 20 Gew.% Aromastoff aufweist, wobei die Summe von Träger, Matrix und Aromastoff 100 Gew.% beträgt.

13. Verfahren gemäss Anspruch 11 oder 12, das in einem Wirbelschichtreaktor durchgeführt wird.

14. Verfahren gemäss Anspruch 13, wobei der Wirbelschichtreaktor im Bodensprühmodus betrieben wird.

## Revendications

1. Composition d'arôme pour des boissons d'infusion, la composition étant sous la forme de particules et comprenant :
un arôme;
un matériau soluble dans l'eau sous la forme d'une matrice contenant l'arôme incorporé dans celle-ci ; et
des particules de support insolubles dans l'eau neutres concernant l'arôme et le goût, qui sont revêtues de la matrice soluble dans l'eau contenant l'arôme,
dans laquelle les particules de support comprennent ou consistent en un ou
plusieurs des matériaux suivants : extrait de matériaux de plantes, extrait de poudre de thé, extrait de feuilles de thé.

2. Composition selon la revendication 1, qui se présente sous la forme de particules agglomérées.

3. Composition selon la revendication 1 ou 2, dans laquelle le diamètre moyen des particules est de 0,2 à 20 mm, un diamètre moyen de 0,4 à 3,0 mm étant particulièrement préféré.

4. Composition selon l'une quelconque des revendications 1 à 3, dans laquelle le matériau de matrice soluble dans l'eau comprend ou consiste en un ou plusieurs des matériaux suivants : amidon et produits d'amidon modifié; gommes naturelles ; oligofructose ; polymères comestibles solubles dans l'eau.

5. Composition selon l'une quelconque des revendications 1 à 4, qui comprend en outre un ou plusieurs revêtements supplémentaires sur le revêtement avec le matériau de matrice contenant l'arôme.

6. Composition selon la revendication 5, dans laquelle le revêtement supplémentaire comprend un agent filmogène choisi parmi : l'amidon et des produits d'amidon modifié; des gommes naturelles ; un oligofructose; des polymères comestibles solubles dans l'eau; des hydrocarbures ; des graisses ; des cires.

7. Utilisation d'une composition d'arôme, qui se présente sous la forme de particules et comprend :
un arôme;
un matériau soluble dans l'eau sous la forme d'une matrice contenant l'arôme incorporé dans celle-ci ; et
des particules de support insolubles dans l'eau neutres concernant l'arôme et le goût, qui sont revêtues avec la matrice soluble dans l'eau contenant l'arôme,
pour aromatiser une boisson d'infusion,
dans laquelle les particules de support comprennent ou consistent en un ou
plusieurs des matériaux suivants : extrait de matériaux de plantes, extrait de poudre de thé, extrait de feuilles de thé.

8. Utilisation selon la revendication 7, dans laquelle la composition est utilisée conjointement avec un matériau végétal extractible.

9. Sachet de thé comprenant un filtre enveloppant la composition selon une ou plusieurs des revendications 1 à 6.

10. Sachet de thé selon la revendication 9, dans lequel les particules de support ont une distribution de tailles telle que le diamètre le plus petit des particules de support soit plus grand que le diamètre de pores du matériau filtrant du sachet de thé.

11. Procédé de préparation d'une composition selon au moins l'une des revendications 1 à 6, qui comprend les étapes suivantes :
(a) fourniture d'un liquide de revêtement comprenant le matériau de matrice soluble dans l'eau et l'arôme ;
(b) fourniture des particules de support insolubles dans l'eau comprenant ou consistant en un ou plusieurs des matériaux suivants : extrait de matériaux de plantes, extrait de poudre de thé, extrait de feuilles de thé,
(c) revêtement et éventuellement agglomération des particules de support avec le liquide de revêtement; et
(d) éventuellement application d'un ou plusieurs revêtements supplémentaires sur la composition obtenue à l'étape (c).

12. Procédé selon la revendication 11, qui a un rapport de mélange de 50 à 70 % en poids de particules de support, de 20 à 30 % en poids de matériau de matrice et de 10 à 20 % en poids d'arôme, la somme du support, de la matrice et de l'arôme étant de 100 % en poids.

13. Procédé selon la revendication 11 ou 12, qui est réalisé dans un réacteur à lit fluidisé.

14. Procédé selon la revendication 13, où le réacteur à lit fluidisé fonctionne en mode de pulvérisation par le bas.
